# EUROPÄISCHE PATENTSCHRIFT

(11) **EP 0 891 713 B1**
(45) Veröffentlichungstag und Bekanntmachung des Hinweises auf die Patenterteilung: **03.09.2003**
(21) Anmeldenummer: 98111499.4
(22) Anmeldetag: 23.06.1998
(51) Int. Cl.: A21C 13/00

(54) **Vorrichtung zur Aufnahme von Teigrohlingen während des Gärprozesses**
Device for containing pieces of crude dough during rising process
Dispositif pour reçevoir des morceaux de pâte brute en cours de procédé de fermentation

(30) Priorität: 24.06.1997 DE 19726804
(43) Veröffentlichungstag der Anmeldung: 20.01.1999
(73) Patentinhaber: MIWE Michael Wenz GmbH, 97450 Arnstein (DE)
(72) Erfinder: Meister, Michael, 97204 Höchberg (DE)
(74) Vertreter: Böck, Bernhard, Dipl.-Ing.

(56) Entgegenhaltungen:
- DE-A- 2 058 366
- DE-A1- 19 534 367
- FR-A1- 2 553 258

## Beschreibung

Die vorliegende Erfindung betrifft eine Vorrichtung zur Aufnahme von Teigrohlingen während des Gärprozesses, insbesondere zur Gärung der Teigrohlinge von Broten.

Nach der Durchmischung der Einzelzutaten einer Teigware muß der Teig vor dem eigentlichen Ausbackprozeß im Regelfall eine Zeitlang gären.

Durch den Gärprozeß geht der Teig auf und vergrößert infolge dessen sein Gesamtvolumen. Es sind verschiedene Möglichkeiten bekannt, den Teigrohling während des Gärprozesses und der damit verbundenen Volumenvergrößerung zu lagern.

Traditionell werden die Teigrohlinge in Gärkörbe aus Holz oder ähnlichen Materialien eingelegt. Diese Gärkörbe bewirken durch ihre Oberflächenstruktur eine Prägung auf dem Teigrohling, die auch nach dem Backprozeß als charakteristische Korbzeichnung an der Brotoberfläche erhalten bleibt. An dieser charakteristischen Korbzeichnung eines Brotlaibes ist die Zubereitung des Brotes in der beschriebenen traditionellen Form erkennbar, weshalb Brote dieser Art vom Verbraucher bevorzugt werden. Nachteilig bei der Gärung von Brotlaiben in traditionellen Gärkörben ist, daß dieses Verfahren nur unter großem Aufwand in automatisierte Produktionsvorgänge integriert werden kann. Auch können in Gärkörben jeweils nur Brote einer Gewichtskategorie und einer Form hergestellt werden, da die Größe und Form der Brote durch die Größe und Form der Gärkörbe eindeutig bestimmt ist. Zudem genügen Gärkörbe dieser Art den hygienischen Anforderungen, wie sie heutzutage an die Herstellung von Lebensmitteln gestellt werden, nur in unzureichender Weise. Die Gärung von Broten in Gärkörben erfordert deshalb regelmäßig die aufwendige Reinigung und Trocknung der Gärkörbe.

Zur Vermeidung der oben beschriebenen Nachteile traditioneller Gärkörbe sind Gärmulden zur Gärung von Teigwaren bekannt, deren Mulde von einem Einlegetuch gebildet wird, in das die Teigrohlinge eingelegt werden. Diese Gärmulden weisen häufig an zwei Stirnseiten keine seitlichen Begrenzungen auf, sind also als rinnenartige durchgehende Gärmulden ausgestaltet, was die Gärung von Broten verschiedener Gewichtsklassen oder auch die Gärung mehrerer Teigrohlinge in einer Gärmulde erlaubt. Nach dem Einlegen der Teigrohlinge in die Gärmulde liegt die Innenoberfläche der Gärmulden zumindest bereichsweise an der Außenoberfläche des Teigrohlings an. Durch die Verwendung von hygienisch einwandfreien Materialien bei der Herstellung dieser bekannten Vorrichtungen, können lebensmittelrechtliche Vorschriften leicht erfüllt werden. Die verwendeten Einlegetücher sind auswechselbar und können gewaschen werden. Die Trocknung eines derartigen Gärtuchs erfordert lediglich ein Drittel des Energieaufwands, den die Trocknung eines vergleichbaren Gärkorbes erfordert.

Nachteilig bei diesen aus dem Stand der Technik bekannten Gärvorrichtungen ist jedoch, daß die Innenoberflächen der Gärmulden eine glatte, d.h. unstrukturierte Oberfläche aufweisen, weshalb die mit Hilfe dieser Gärmulden hergestellten Teigwaren nach dem Backprozeß keine, insbesondere keine einer Korbzeichnung vergleichbare Oberflächenstruktur an ihrer Außenhaut aufweisen. Mit anderen Worten lassen sich mit den bekannten Gärmulden hygienisch einwandfreie Teigwaren in einem weitgehend automatisierbaren Verfahren herstellen, die Endprodukte genügen jedoch wegen der fehlenden Korbzeichnung nicht den Ansprüchen vieler Endverbraucher.

Eine Vorrichtung mit einem Einlegetuch zur Aufnahme von Teigrohlingen, welches mit einer struktur versehen ist, ist nach der DE-A-195 34 367 bekannt.

Ausgehend von diesem Stand der Technik liegt der vorliegenden Erfindung die Aufgabe zugrunde, eine Vorrichtung gemäß dem Oberbegriff des Anspruch 1 zu schaffen, mit der flexibel geprägte Teigrohlinge unterschiedlicher Länge und mit unterschiedlichem Gewicht hergestellt werden können.

Diese Aufgabe wird durch eine Vorrichtung mit den Merkmalen des Anspruchs 1 gelöst.

Vorteilhafte Ausgestaltungen der Erfindung sind Gegenstand der Unteransprüche.

Bei der erfindungsgemäßen Vorrichtung sind an der Innenoberfläche der Gärmulde aus der Oberfläche des Einlegeelements hervorragende Formelemente vorgesehen, die so angeordnet und ausgebildet sind, daß sie zumindest bereichsweise während des Gärprozesses in die Außenoberfläche der anliegenden Teigrohlings eingeprägt werden. Diese prägenden Formelemente bewirken eine Oberflächenprägung des Teigrohlings während des Gärprozesses und ermöglichen so die Herstellung von Broten mit einer, insbesondere der traditionellen Korbzeichnung vergleichbaren, Oberflächenstruktur. Die prägenden Formelemente können dabei lösbar oder unlösbar an der Innenoberfläche der Gärmulde fixiert sein. Es können alle Arten von Materialien zur Ausbildung der prägenden Formelemente eingesetzt werden, wobei selbstverständlich hygienisch einwandfreie Materialien vorzuziehen sind.

Besonders einfach lassen sich die erfindungsgemäßen Gärmulden herstellen, wenn die prägenden Formelemente im wesentlichen durch in das Einlegetuch eingewebte oder eingestickte, lokale Verdickungen des Einlegetuchs bewirkende, Strukturen gebildet werden.

Die prägenden Formelemente können auch durch lokale Einfaltung des Einlegtuchs gebildet werden. Besonders vorteilhaft ist es dabei, die Einfaltungen nicht regellos auszubilden, sondern die Einfaltung des Einlegetuchs unter Bildung im Querschnitt laschenartiger Taschen an der Innenoberfläche der Gärmulde auszuführen. Streifenförmige Bereiche des Tuchmaterials werden laschenartig übereinandergelegt und durch Nähte am Fuß der Lasche fixiert. Die laschenartigen Einfaltungen des Tuchmaterials bilden dann durchgehende Taschen an der Innenoberfläche der Gärmulde aus.

Werden Teigwaren mit ausgeprägterem Oberflächenprofil gewünscht, ist es erfindungsgemäß möglich, in die durchgehenden Taschen des Einlegetuchs formstabile Prägeelemente, insbesondere prismatische, kreisförmige oder kreisringförmige Stäbe, einzubringen. Dadurch werden die Taschen formstabil ausgefüllt und es ist dadurch in einfacher Weise möglich, Oberflächenstrukturen mit einer großen Prägetiefe an den Teigrohlingen zu bewirken. Vorteilhaft ist dabei, daß die Stäbe nicht in unmittelbaren Kontakt mit dem Teig kommen, was den Einsatz beispielsweise von Holzstäben ermöglicht.

Im Prinzip kann jedoch zur Ausbildung der prägenden Formelemente jede Art von Werkstoff verwendet werden.

Es ist erfindungsgemäß insbesondere auch möglich, die prägenden Formelemente zumindest teilweise aus kordel- oder schnurartigen Elementen, die beispielsweise in die Einlegetücher eingenäht werden, herzustellen. Diese Materialien können Eigenschaften aufweisen, insbesondere bezüglich der Fähigkeit zur Feuchtigkeitsaufnahme, die den Eigenschaften prägender Formelemente von konventionellen Gärkörben entsprechen, weshalb die herstellbaren Endprodukte vergleichbare Eigenschaften aufweisen.

Wegen der hygienisch einwandfreien Eigenschaften eignen sich für den Einsatz als prägende Formelemente ganz allgemein die Materialien Kunststoff oder Metall, insbesondere Edelstahl. Auch Holz kann zum Einsatz kommen, insbesondere dann, wenn es nicht direkt mit den Teigrohlingen in Kontakt kommt. Ob die Prägeelemente dabei in durchgehenden Taschen des Einlegetuchs eingeschoben sind oder anders auf dem Einlegetuch fixiert werden, ist erfindungsgemäß ohne Belang.

Zu beachten ist jedoch, daß Prägeelemente aus Kunststoff oder Metall im Ergebnis eine andere Oberflächencharakteristik der fertiggebackenen Teigwaren bewirken, als man dies von konventionellen Gärkörben aus Holz oder holzähnlichem Material gewohnt ist. Die im Ergebnis erhaltene Profilstruktur der Teigwaren, die mit einem Prägeelement aus Kunststoff oder Metall hergestellt wurden, weist eine schärfere Profilzeichnung auf, als dies bei Teigwaren der Fall ist, die in konventionellen Gärkörben gegärt wurden. So entspricht die maximale Profiltiefe eines Brotes, das auf einem Prägeelement aus Kunststoff oder Metall mit einem Durchmesser von 4 mm gegärt wurde, der maximalen Profiltiefe eines Brotes, das in einem konventionellem Gärkorb hergestellt wurde, dessen prägende Holzstrukturen einen Durchmesser von ca. 9 mm aufweisen. Da die Verbraucher an Brote gewöhnt sind, die in konventionellen Gärkörben hergestellt wurden, können deshalb die Durchmesser der Prägeelemente aus Kunststoff oder Metall ungefähr der Hälfte des Durchmessers der Prägeelemente eines konventionellen Gärkorbs aus Holz entsprechen. Besonders vorteilhaft ist es, Prägeelemente aus Kunststoff oder Metall zu verwenden, die ein Durchmesser von ca. 4 mm aufweisen, da damit Brote hergestellt werden können, die eine Profiltiefe aufweisen, die der Profiltiefe von Broten entspricht, die in Gärkörben mit dem üblichen Prägeelementdurchmesser von ca. 9 mm hergestellt wurden. Das Verhältnis der erzielten Profiltiefen zum Durchmesser der prägenden Formelemente kann dabei für alle Durchmesser gleichbleibend gehalten werden.

Im Grundsatz können alle Arten von Oberflächenstrukturen in die Teigrohlinge eingeprägt werden. Es ist jedoch vorteilhaft, die prägenden Formelemente im wesentlichen linear, insbesondere geradlinig verlaufend, anzuordnen. Diese Geometrie erlaubt die Einprägung einer gleichbleibenden Struktur in die Teigrohlinge, unabhängig davon wie groß die Teigrohlinge sind und wieviele Teigrohlinge gleichzeitig in eine erfindungsgemäße Vorrichtung eingelegt werden.

Die prägenden Formelemente haben vorzugsweise einen axialen Abstand im Bereich von 3 bis 25 mm, da die sich daraus ergebenden Oberflächenstrukturen nach dem Backen für Brote aller Größenordnungen einen ansprechenden optischen Eindruck ergeben.

Die prägenden Formelemente ragen vorzugsweise 1 bis 10 mm, insbesondere 3 bis 6 mm, aus der Innenfläche der Gärmulde hervor, da die sich daraus ergebenden Profiltiefen nach dem Backen für Brote aller Größenordnungen ebenfalls einen ansprechenden optischen Eindruck ergeben.

Für das Einlegeelement kann im Grundsatz jedes flexible Material, insbesondere auch Folien oder Netze aus Kunststoff oder Metall, eingesetzt werden. Besonders geeignet zur Ausbildung eines Einlegetuchs sind im wesentlichen feuchtigkeitsaufnehmende oder zumindest teilweise feuchtigkeitsdurchlässige textile Stoffe, insbesondere trikotartige Stoffe. Diese Materialien verbessern durch die Aufnahme oder Abfuhr von Feuchtigkeit den Verlauf des Gärprozeß und sind durch konventionelle Waschverfahren leicht sauber zu halten.

Wie Versuche gezeigt haben, wird die gewünschte Oberflächenstruktur an der Außenhaut der gebackenen Brote im wesentlichen nicht allein durch die Einprägung von Formelementen in den Teigrohling bewirkt, sondern auch durch eine ortsabhängige Feuchtigkeitsverteilung an der Oberfläche des Teigrohlings während der Gärung. Teigrohlinge, die in Gärkörben aus Kunststoff mir einer profilierten Innenfläche gegärt wurden, zeigten beispielsweise nach dem Backprozeß als fertige Brote nur sehr schwache oder gar keine Oberflächenstrukturen. Das Einlegetuch kann daher nach einem bevorzugten Ausführungsbeispiel solche Bereiche verringerter Feuchtigkeitsaufnahme und/oder Feuchtigkeitsdurchlässigkeit aufweisen, die vorzugsweise im Bereich der Formelemente und/oder Prägelemente angeordnet sind oder durch diese gebildet werden. Durch die damit gezielt beeinflußbare Feuchtigkeitsverteilung während der Gärung wird die Oberflächenstruktur nach dem Backprozeß wesentlich stärker ausgebildet.

Nachfolgend wird die Erfindung anhand lediglich eine bevorzugte Ausführungsform der erfindungsgemäßen Vorrichtung darstellender Zeichnungen näher erläutert. Es zeigt:
- **Fig. 1**: in schematischer Darstellung eine erfindungsgemäße Vorrichtung in perspektivischer Ansicht,
- **Fig. 2**: die in **Fig. 1** dargestellte Ausführungsform in schematischer Ansicht von der Seite,
- **Fig. 3**: die in **Fig. 1** dargestellte Ausführungsform in schematischer Ansicht von oben,
- **Fig. 4**: ein Prägeelement einer erfindungsgemäßen Vorrichtung in seitlich geschnittener Ansicht.

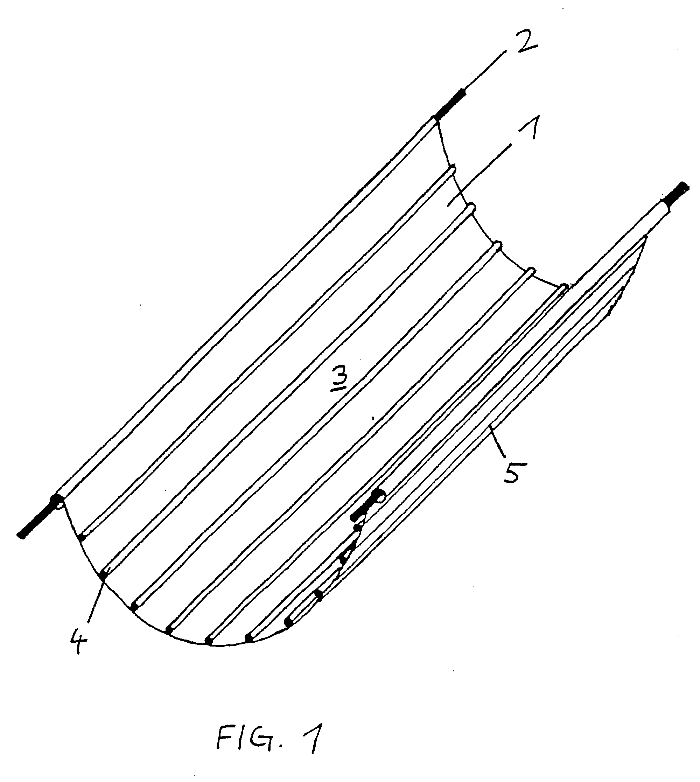

**Fig. 1** zeigt eine erfindungsgemäße Vorrichtung, deren Gärmulde von einem Einlegetuch 1 gebildet wird, das von zwei parallel verlaufenden Tragestäben 2 gehalten wird. Die beiden Tragestäbe 2 werden in einer nicht dargestellten Gärvorrichtung in definiertem Abstand zueinander eingehängt, so daß sich im Ergebnis eine rinnenartig durchgehende Gärmulde ergibt, die an den Stirnseiten keine seitliche Begrenzung aufweist. Für den Gärprozeß würde ein nicht dargestellter Teigrohling in das Einlegetuch eingelegt werden und somit mit seiner Außenoberfläche zumindest bereichsweise an der Innenoberfläche 3 der Gärmulde flächig anliegen.

In der Innenoberfläche der Gärmulde sind parallel verlaufende Prägeelemente 4 angeordnet, die aus der glatten Oberfläche des Tuchmaterials hervorstehen und während des Gärprozesses in die Außenoberfläche des Teigrohlings eingeprägt werden. Die Prägestäbe sind dabei als durchgehende Taschen im Tuchmaterial mit eingeschobenen Stäben ausgebildet. Die laschenartigen Einfaltungen werden durch die Nähte 5 dauerhaft fixiert.

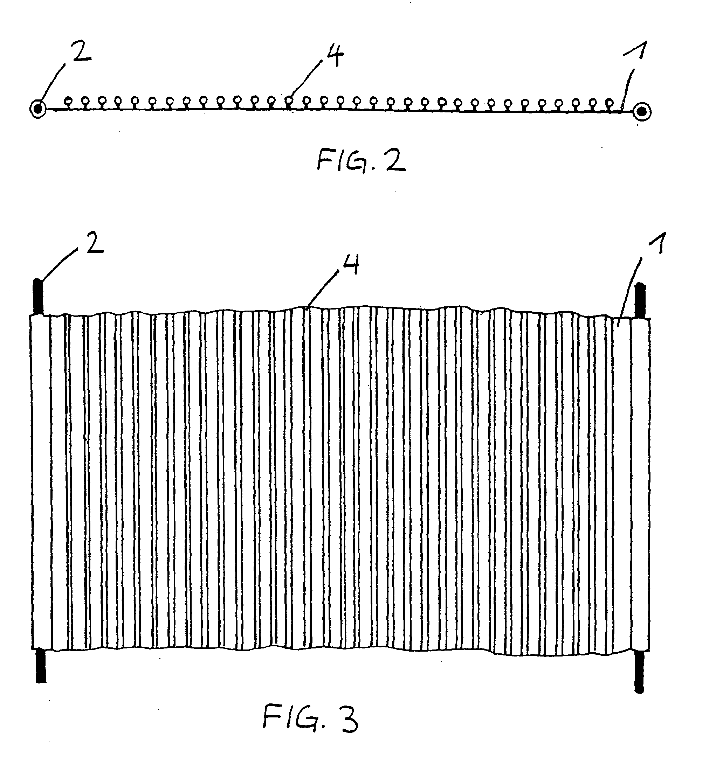

**Fig. 2** und **Fig. 3** zeigen die gleiche Ausführungsform wie in **Fig. 1** in einer Ansicht von der Seite und in einer Ansicht von oben. Man erkennt wiederum die prägenden Formelemente 4, die pilzartig an der Oberfläche des Einlegetuchs 1 angeordnet sind. Die Gärmulde ist dabei in einem gestreckten Zustand dargestellt, wie er beispielsweise bei der Trocknung der Gärtücher notwendig ist.

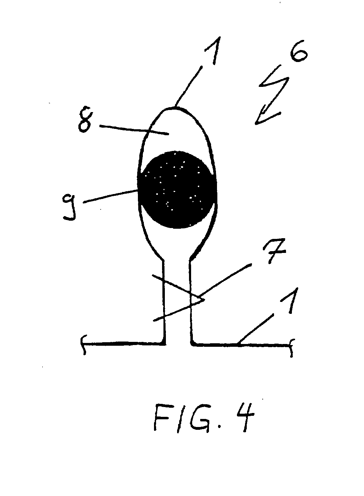

**Fig. 4** zeigt ein erfindungsgemäßes Prägeelement in seitlich geschnittener Ansicht. Man erkennt das gebrochen dargestellte Einlegetuch 1, das eine laschenartige Einfaltung 6 aufweist, die durch eine Naht 7 fixiert ist. In die dadurch entstehende durchgehende Tasche 8 ist zur Verstärkung der Prägetiefe ein formstabiler Prägestab 9 eingeschoben.

## Patentansprüche

1. Vorrichtung zur Aufnahme von Teigrohlingen während des Gärprozesses, mit einem im Wesentlichen flexiblen eine Gärmulde bildenden Einlegetuch, zur Aufnahme der Teigrohlinge, wobei die Außenoberfläche der Teigrohlinge zumindest bereichsweise an der Innenoberfläche der Gärmulde zur Anlage bringbar ist, und wobei an der Innenoberfläche der Gärmulde aus der Oberfläche des Einlegetuches hervorragende Formelemente vorgesehen sind, die so angeordnet und ausgebildet sind, daß sie zumindest bereichsweise während des Gärprozesses in die Außenoberfläche der an Liegenden Teigrohlinge eingeprägt werden,
**dadurch gekennzeichnet,**
**dass** das Einlegetuch von zwei parallel verlaufenden Tragstäben derart haltbar ist, dass durch Einhängen der Tragstäbe vom Einlegetuch eine rinnenartige Gärmulde ohne seitliche Begrenzungen an den Stirnseiten gebildet wird, wobei die Formelemente im Wesentlichen parallel zur Längsachse der Gärmulde verlaufen.

2. Vorrichtung nach Anspruch 1,
**dadurch gekennzeichnet,**
**daß** die Formelemente im wesentlichen durch in das Einlegtuch eingewebte oder eingestickte, lokale Verdickungen des Einlegetuchs bewirkende, Strukturen gebildet werden.

3. Vorrichtung nach Anspruch 1,
**dadurch gekennzeichnet,**
**daß** die Formelemente durch lokale Einfaltung des Einlegtuchs gebildet werden.

4. Vorrichtung nach Anspruch 3,
**dadurch gekennzeichnet,**
**daß** die Einfaltung des Einlegetuchs (1) unter Bildung im Querschnitt laschenartiger Taschen (8) an der Innenoberfläche (3) der Gärmulde erfolgt.

5. Vorrichtung nach Anspruch 4,
**dadurch gekennzeichnet,**
**daß** in die im Querschnitt laschenartigen Taschen (8) im wesentlichen formstabile Prägeelemente (4), insbesondere im Querschnitt vorzugsweise prismatische, kreisförmige oder kreisringförmige Stäbe (9), einbringbar sind.

6. Vorrichtung nach einem der Ansprüche 1 bis 5,
**dadurch gekennzeichnet,**
**daß** die Formelemente und/oder Prägeelemente zumindest teilweise aus kordel- oder schnurartigen Elementen bestehen.

7. Vorrichtung nach einem der Ansprüche 1 bis 6,
**dadurch gekennzeichnet,**
**daß** die Formelemente und/oder Prägeelemente zumindest teilweise aus Holz, Kunststoff oder Metall, insbesondere Edelstahl, bestehen.

8. Vorrichtung nach einem der Ansprüche 1 bis 7,
**dadurch gekennzeichnet,**
**daß** die Formelemente und/oder Prägeelemente (4) linear, insbesondere im wesentlichen geradlinig verlaufen.

9. Vorrichtung nach einem der Ansprüche 1 bis 8,
**dadurch gekennzeichnet,**
**daß** die Formelemente und/oder Prägelemente (4) einen axialen Abstand zwischen 3 und 25 mm aufweisen.

10. Vorrichtung nach einem der Ansprüche 1 bis 9,
**dadurch gekennzeichnet,**
**daß** die Formelemente und/oder Prägeelemente (4) 1 bis 10 mm, vorzugsweise 3 bis 6 mm, aus der Innenfläche (3) der Gärmulde hervorragen.

11. Vorrichtung nach einem der Ansprüche 1 bis 10,
**dadurch gekennzeichnet,**
**daß** das Einlegetuch (1) der Gärmulde aus einem im wesentlichen feuchtigkeitsaufnehmenden oder zumindest teilweise feuchtigkeitsdurchlässigen Stoff, insbesondere trikotartigen Stoff besteht.

12. Vorrichtung nach Anspruch 11,
**dadurch gekennzeichnet,**
**daß** das Einlegetuch (1) Bereiche verringerter Feuchtigkeitsaufnahme und/oder Feuchtigkeitsdurchlässigkeit aufweist, die vorzugsweise im Bereich der Formelemente und/oder Prägelemente (4) angeordnet sind oder durch diese gebildet werden.

## Claims

1. A device for accommodating semifinished dough products during the leavening process, with an essentially flexible lining cloth forming a leavening trough, for accommodating the semifinished dough products, whereby the outside surface of the semifinished dough products can be brought into contact with the inside surface of the leavening trough in at least some areas, and whereby mould elements are provided on the inside surface of the leavening trough, projecting out of the surface of the lining cloth, these mould elements being arranged and designed so that they are impressed into the outside surface of the adjacent semifinished dough products at least in some areas during the leavening process,
**characterized in that**
the lining cloth can be held by two supporting rods running in parallel such that by suspending the supporting rods from the lining cloth, a channel-like leavening trough is formed without any lateral borders on the end faces, the moulding elements running essentially parallel to the longitudinal axis of the leavening trough.

2. The device according to Claim 1,
**characterized in that**
the mould elements are formed essentially by structures woven or inserted through the lining cloth, causing local thickening of the lining cloth.

3. The device according to Claim 1,
**characterized in that**
the mould elements are formed by local folding of the lining cloth.

4. The device according to Claim 3,
**characterized in that**
the lining cloth (1) is folded to form pockets (8) having a strap-like cross section on the inside surface (3) of the leavening trough.

5. The device according to Claim 4,
**characterized in that**
embossing elements (4) which essentially have dimensional stability, in particular rods (9) preferably having a prismatic, circular or ring-shaped cross section, can be introduced into the pockets (8) which have a strap-like cross section.

6. The device according to one of Claims 1 through 5,
**characterized in that**
the mould elements and/or embossing elements consist at least partially of cord-like or rope-like elements.

7. The device according to one of Claims 1 through 6,
**characterized in that**
the mould elements and/or the embossing elements are made at least partially of wood, plastic or metal, in particular high-grade steel.

8. The device according to one of Claims 1 through 7,
**characterized in that**
the mould elements and/or the embossing elements (4) run linearly, in particular essentially in a straight line.

9. The device according to one of Claims 1 through 8,
**characterized in that**
the mould elements and/or the embossing elements (4) have an axial distance between 3 mm and 25 mm.

10. The device according to one of Claims 1 through 9,
**characterized in that**
the mould elements and/or the embossing elements (4) project 1 to 10 mm, preferably 3 to 6 mm, out of the inside surface (3) of the leavening trough.

11. The device according to one of Claims 1 through 10,
**characterized in that**
the lining cloth (1) of the leavening trough consists of an essentially moisture-absorbing fabric or an at least partially moisture-permeable fabric, in particular a tricot-like fabric.

12. The device according to Claim 11,
**characterized in that**
the lining cloth (1) has areas of reduced moisture absorbency and/or moisture permeability, which are preferably arranged in the area of the mold elements and/or the embossing elements (4) or are formed by them.

## Revendications

1. Dispositif destiné à recevoir des pâtons bruts pendant le processus de fermentation, avec un linge inséré substantiellement souple formant une auge de fermentation, destiné à recevoir les pâtons bruts, la surface externe des pâtons bruts pouvant être amenée au moins par endroits en contact avec la surface interne de l'auge de fermentation, et des éléments de moulage débordant de la surface du linge inséré étant prévus sur la surface interne de l'auge de fermentation, éléments qui sont disposés et configurés de manière à être enfoncés au moins par endroits dans la surface externe des pâtons bruts contigus pendant le processus de fermentation,
**caractérisé en ce que**
le linge inséré peut être maintenu par deux baguettes support orientées parallèlement l'une par rapport à l'autre de manière à ce que, en suspendant les baguettes support, une auge de fermentation en forme de gouttière sans limitations latérales est constituée sur les faces frontales, les éléments de moulage étant orientés substantiellement à la parallèle de l'axe longitudinal de l'auge de fermentation.

2. Dispositif selon la revendication 1,
**caractérisé en ce que**
les éléments de moulage sont constitués substantiellement par des structures tissées ou piquées formant des surépaisseurs locales dans le linge inséré.

3. Dispositif selon la revendication 1,
**caractérisé en ce que**
les éléments de moulage sont constitués par un pliage local du linge inséré.

4. Dispositif selon la revendication 3,
**caractérisé en ce que**
le pliage du linge inséré (1) se fait en formant des poches en forme de languettes (8) dans leur section transversale sur la surface interne (3) de l'auge de fermentation.

5. Dispositif selon la revendication 4,
**caractérisé en ce que**
dans les poches en forme de languettes (8) dans leur section transversale peuvent être installés des éléments de gaufrage (4) substantiellement de forme stable, en particulier des baguettes (9) de préférence prismatiques, rondes ou circulaires dans leur section transversale.

6. Dispositif selon une des revendications 1 à 5,
**caractérisé en ce que**
les éléments de moulage et/ou éléments de gaufrage consistent au moins partiellement en éléments de type cordon ou lacet.

7. Dispositif selon une des revendications 1 à 6,
**caractérisé en ce que**
les éléments de moulage et/ou éléments de gaufrage consistent au moins partiellement en bois, matière plastique ou métal, notamment acier inoxydable.

8. Dispositif selon une des revendications 1 à 7,
**caractérisé en ce que**
les éléments de moulage et/ou éléments de gaufrage (4) suivent une trajectoire linéaire, notamment substantiellement rectiligne.

9. Dispositif selon une des revendications 1 à 8,
**caractérisé en ce que**
les éléments de moulage et/ou éléments de gaufrage (4) présentent un écartement axial situé entre 3 et 25 mm.

10. Dispositif selon une des revendications 1 à 9,
**caractérisé en ce que**
les éléments de moulage et/ou éléments de gaufrage (4) débordent de 1 à 10 mm, de préférence de 3 à 6 mm, de la surface interne (3) de l'auge de fermentation.

11. Dispositif selon une des revendications 1 à 10,
**caractérisé en ce que**
le linge inséré (1) dans l'auge de fermentation consiste en un tissu absorbant substantiellement l'humidité ou au moins partiellement perméable à l'humidité, notamment un tissu de type tricot.

12. Dispositif selon la revendication 11,
**caractérisé en ce que**
le linge inséré (1) présente des zones à absorption d'humidité et/ou perméabilité réduite, qui sont de préférence disposées dans la zone des éléments de moulage et/ou éléments de gaufrage (4) ou formées par ceux-ci.
